# EUROPEAN PATENT APPLICATION

(11) **EP 1 679 850 A2**
(43) Date of publication of application: **12.07.2006**
(21) Application number: 06000500.6
(22) Date of filing: 11.01.2006
(51) Int. Cl.: H04L 27/26, H04L 5/02

(54) **Pilot-based channel estimation method for mc-cdma system**

(30) Priority: 11.01.2005 KR 2005002513
(71) Applicant: SAMSUNG ELECTRONICS CO., LTD., Suwon-si, Gyeonggi-do (KR); Yonsei University, Seoul (KR)
(72) Inventor: Kwun, Jong-Hyung, Samsung Electronics Co., Ltd., Suwon-si, Gyeonggi-do (KR); Kim, Eung-Sun, Samsung Electronics Co., Ltd., Suwon-si, Gyeonggi-do (KR); Lee, Jong-Hyeuk, Samsung Electronics Co., Ltd., Suwon-si, Gyeonggi-do (KR); Hong, Dae-Sik, Seoul (KR); Cho, Young-Bo, Seoul (KR)
(74) Representative: Grünecker, Kinkeldey, Stockmair & Schwanhäusser Anwaltssozietät

(57) **Abstract**

Disclosed is a method for estimating a channel using a pilot signal in a wireless communication system based on multi-carrier multiple access. A transmission side generates a pilot symbol correlated with spread data symbols which is included in a spread symbol generated through a band spreading, inserts the pilot symbol into the spread symbol, and transmits the spread symbol. A reception side receives the spread symbol and detects the pilot signal by using the spread data symbols and pilot symbol included in the spread symbol. Therefore, it is possible to simultaneously obtain both the position optimization of a pilot symbol, according to a channel state such as a correlation band or correlation time (which is an advantage over the pilot-tone-based channel estimation method), and a noise reduction effect by the averaging procedure (which is an advantage over the pilot-channel-based channel estimation method), so that the accuracy of channel estimation can be improved.

## Description

The present invention relates to a mobile communication system, and more particularly to a channel estimation method using a pilot channel in a Multi-Carrier Code Division Multiple Access (MC-CDMA) system which employs a frequency interleaving scheme.

In the next-generation mobile communication system, high-speed and high-quality data transmission is required to continue to support various multimedia services and further improve quality. In order to satisfy such requirements, studies are being actively conducted in the MC-CDMA technology.

MC-CDMA technology is based on the orthogonal frequency division multiplexing (OFDM) technology and the CDMA technology. According to the OFDM technology, data is divided and transmitted by narrow-band subcarriers that are orthogonal to each other, thereby reducing performance degradation due to a frequency selective fading channel which may occur in wideband transmission. Also, according to the OFDM technology, a guard interval is inserted into the OFDM signal, so that it is possible to solve an inter-symbol interference (ISI) problem caused by multipath fading. The CDMA technique distinguishes users based on spreading codes that are orthogonal to each other, so that the CDMA technique has an advantage in view of system capacity as compared with the frequency division multiple access (FDMA) technique and the time division multiple access (TDMA) technique.

In the MC-CDMA system, a pilot symbol, such as a training sequence, which is already known by the reception terminal, is transmitted in order to enable channel estimation. However, in order to exactly estimate channels under a fast fading channel or multipath channel environment, more pilot symbols are required, thereby reducing the data rate. Also, since channel estimation by the general least square (LS) technique causes performance degradation due to noise, the minimum mean square error (MMSE) estimation technique or an averaging technique is mainly used for channel estimation. However, the MMSE technique has disadvantages in that the statistical property of a noise signal must be known and a complicated operation process must be executed

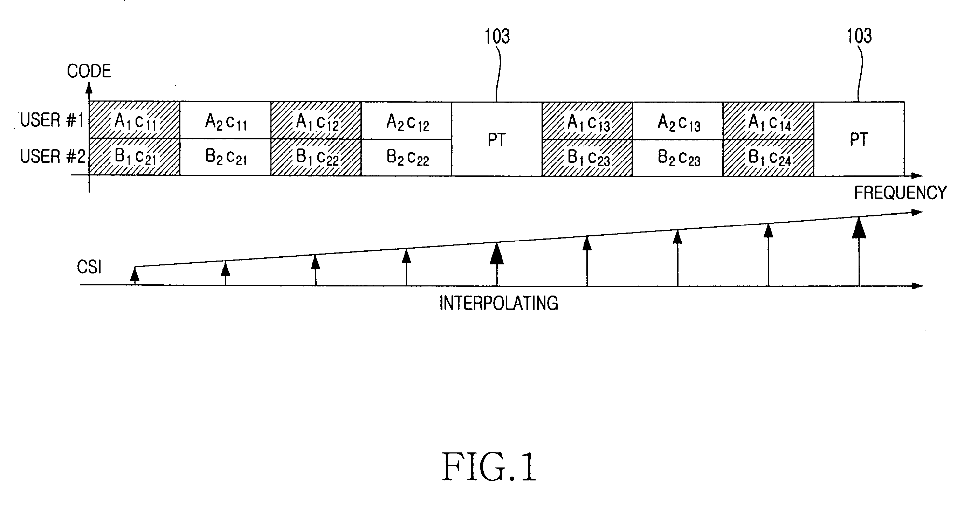

FIG. 1 is a conceptual diagram of a conventional pilot-tone-based channel estimation method. FIG. 1 illustrates transmission signals in the case in which the spreading factor is 4 for two user terminals. According to the pilot-tone-based channel estimation method, when pilot tones (PT) 103 are disposed at a proper interval according to the correlation bandwidths and the correlation time of transmission channels, a reception side can properly estimate channels over the entire frequency band and entire time band by using the interpolation technique. However, a large number of pilot tones must be inserted into the corresponding signal in order to perform precise channel estimation, and the subcarriers including the pilots cannot be used for information transmission, so that the conventional channel estimation method cannot avoid causing a loss in the transmission rate. In addition, when an interval between pilot tones is longer than the correlation bandwidth or correlation time, an error in the interpolation process may occur within a section in which no pilot is transmitted, which makes exact channel estimation difficult.

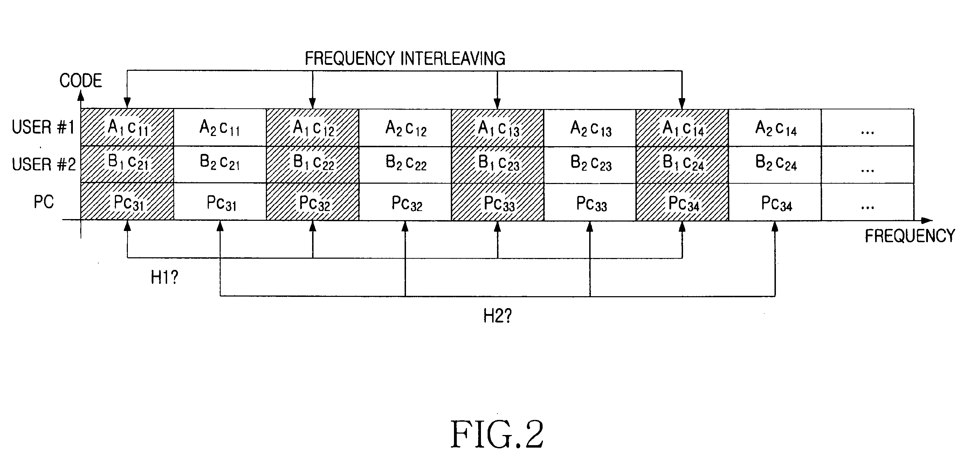

FIG 2 is a conceptual diagram of a conventional pilot-channel-based channel estimation method. FIG. 2 illustrates transmission signals in the case in which the spreading factor is 4 for two user terminals. According to the pilot-channel-based channel estimation method, one spreading code is allocated for channel estimation in order to always transmit a pilot signal over the entire frequency band, so that a change in the transmission pattern and a loss in the transmission rate depending on the change of the channel environment is relatively small as compared with the pilot-tone-based channel estimation method. Also, according to the pilot-channel-based channel estimation method, the reception terminal performs an averaging procedure of noise in the despreading process for a pilot channel, so that the channel estimation performance increases. However, the pilot-channel-based channel estimation method cannot be applied to the MC-CDMA employing a frequency interleaving scheme because the orthogonality between data and a pilot symbol in the correlation bandwidth is not maintained in the MC-CDMA.

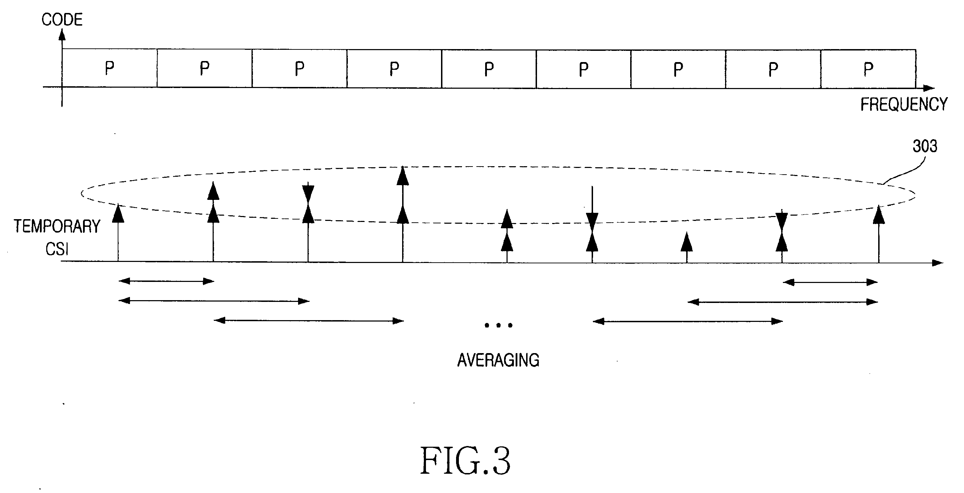

FIG. 3 is a conceptual diagram of a block-type channel estimation method in which pilot signals are transmitted over the entire frequency band of an OFDM symbol at a specific time. According to the block-type channel estimation method, it is possible to reduce the influence of noise 303 by averaging the pilot signals transmitted through the pilot symbols within the frequency band and time band of one frame, so that the channel estimation performance can be improved. However, it is difficult to estimate the channel change in the time domain under a high Doppler channel environment, and a transmission rate loss may significantly occur because pilot signals are transmitted over the entire frequency band without taking into consideration the correlation bandwidth of a channel.

Accordingly, the present invention has been made to solve at least the above-mentioned problems occurring in the prior art, and the object of the present invention is to provide a channel estimation method capable of reducing noise through an averaging procedure and optimizing positions of pilot symbols according to the channel environment such as the correlation band, correlation time, etc., thereby improving the accuracy of channel estimation.

This object is solved by the invention as claimed in the independent claims.

Preferred embodiments are specified in the dependent claims.

In accordance with one aspect of the present invention, there is provided a method for estimating a channel using a pilot signal in a wireless communication system based on multi-carrier multiple access technology, in which a transmission side transmits a pilot channel which is spread using an allocated spreading code so that the pilot channel may be distinguished from data symbols, and generates and transmits a pilot symbol correlated with data symbols in specific subcarriers; and a reception side receives the spread symbol and detects the pilot signal by using the data dependent pilot symbol which includes the information of data symbols.

The above and other objects, features and advantages of the present invention will be more apparent from the following detailed description taken in conjunction with the accompanying drawings, in which:
FIG 1 is a diagram of a conventional pilot-tone-based channel estimation method;
FIG. 2 is a diagram of a conventional pilot-channel-based channel estimation method;
FIG 3 is a diagram of a conventional channel estimation method based on an OFDM symbol;
FIG. 4 is a block diagram illustrating a Multi-Carrier Code Division Multiple Access system according to an embodiment of the present invention;
FIG. 5 is a diagram of a signal transmitted from the transmitter shown in FIG 4;
FIG. 6 is a graph of the performance test result for a mean square error as a function of Eb/No according to the channel estimation method of the present invention; and
FIG 7 is a graph of the performance test result for a bit error rate as a function of Eb/No according to the channel estimation method of the present invention.

Hereinafter, one preferred embodiment of a channel estimation method according to the present invention will be described with reference to the accompanying drawings. In the following description of the embodiments of the present invention, a detailed description of known functions and configurations incorporated herein will be omitted when it may obscure the subject matter of the present invention.

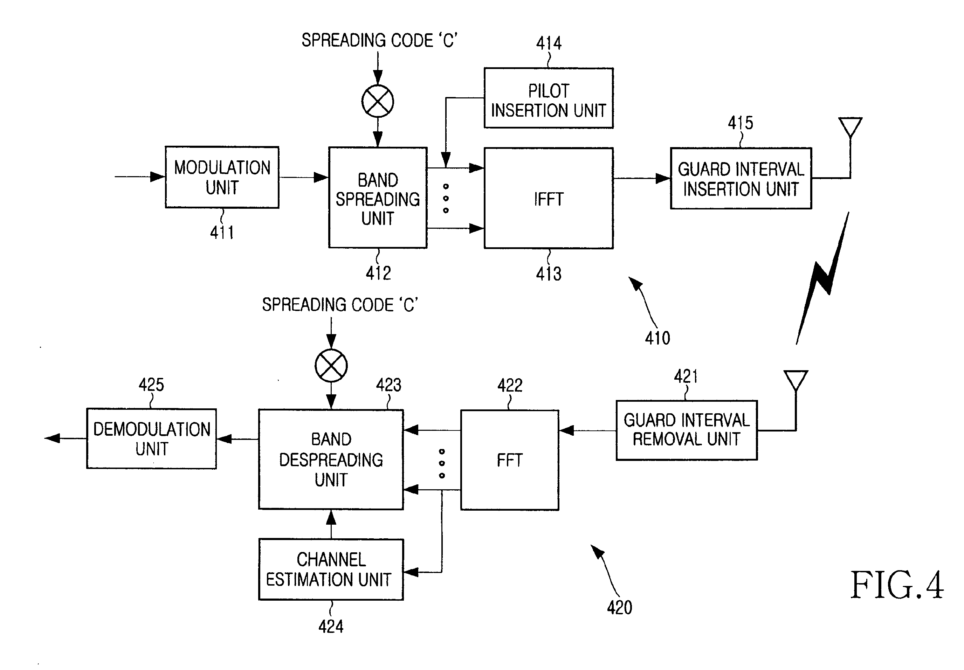

FIG. 4 is a block diagram illustrating a Multi-Carrier Code Division Multiple Access (MC-CDMA) system according to an embodiment of the present invention.

The MC-CDMA system includes a transmitter 410 and a receiver 420. The transmitter 410 includes a modulation unit 411, a band spreading unit 412, an inverse fast Fourier transform (IFFT) unit 413, a pilot insertion unit 414, and a guard interval insertion unit 415. The modulation unit 411 modulates an input information bit according to a modulation scheme. The band spreading unit 412 multiplies a data symbol 's' output from the modulation unit 411 by a band spreading code 'c'. The inverse fast Fourier transform unit 413 performs an inverse Fourier transformation of the spread symbols output from the band spreading unit 412. The pilot insertion unit 414 inserts a pilot signal into the spreading symbols before the inverse Fourier transformation of the spread symbols. The guard interval insertion unit 415 inserts a guard interval into a signal stream output from the inverse fast Fourier transform unit 413. The receiver 420 includes a guard interval removal unit 421, a fast Fourier transform unit (IFFT) 422, a band despreading unit 423, a channel estimation unit 424, and a demodulation unit 425. The guard interval removal unit 421 removes a guard interval from a signal received through a wireless channel. The fast Fourier transform unit 422 performs a Fourier transformation of a signal from which a guard interval has been removed by the guard interval removal unit 421. The band despreading unit 423 performs a despreading operation by multiplying parallel signal streams output through the fast Fourier transform unit 422 by a spreading code, and outputs a serial signal. The channel estimation unit 424 estimates a channel by using an output signal of the fast Fourier transform unit 422. The demodulation unit 425 demodulates a signal output from the band despreading unit 423.

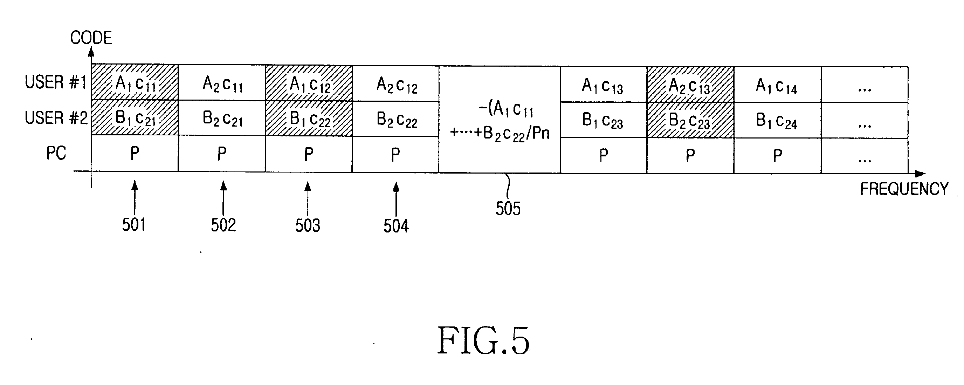

FIG 5 is a diagram of a signal transmitted from the transmitter shown in FIG. 4. FIG. 5 illustrates the case in which two user terminals transmit signals having a spreading factor (SF) of '4'. In FIG. 5, the longitudinal axis represents a code index, and the lateral axis represents a subcarrier index. An i^{th} transmission 'Aᵢ' and 'Bᵢ' of a 1^{st} and 2^{nd} user are spread using spreading codes 'cₖ={cₖ₁, cₖ₂, cₖ₃, cₖ₄}' in which (k = 1 or 2) is user index. And then transmission symbol is interleaved into the frequency axis. In FIG. 5, 'P' 510 represents a pilot signal known by a reception terminal. Pilot signal is spread by Walsh code 'c₀={1, 1, 1, 1}'.

According to the channel estimation method based on the present invention, the pilot channel is allotted with a pilot signal over the entire frequency band, in which a specific subcarrier is allocated with a data-dependent pilot symbol 505 correlated with the transmission data. The pilot symbol is designed so that data symbol components are eliminated in the averaging procedure of the reception terminal, and is inserted into a proper position according to channel states. The pilot symbol is determined by dividing a reciprocal number of the sum of spreading symbols for all users by a power normalization factor 'Pn'.

According to the conventional pilot-channel-based channel estimation method, a spreading code having a shorter length than a correlation band must be allocated to a pilot channel, which increases a loss of the transmission data. In contrast, according to the channel estimation method based on the present invention, since a user signal and a pilot signal can be identified by the data-dependent pilot symbol, the longest spreading code can be allocated to a pilot channel, so that data rate loss is reduced based only depending on the number of pilot symbols.

The channel estimation according to the present invention is achieved by an averaging procedure of successive subcarriers. Therefore, when a subcarrier carrying the data-dependent pilot symbol 505 is multiplied by a power normalization factor, received, and averaged with subcarriers 501 to 504 carrying data, user signals are all eliminated and only a pilot signal 'P' remains.

When it is assumed that five successive subcarriers are included within the range of a correlation bandwidth for convenience of description, it may be said that channel responses 'Hₙ' within this bandwidth are equal. Therefore, received signals according to subcarriers may be expressed as shown in Table 1.

**Table 1**

| | |
|---|---|
| Received Signal of Subcarrier 1 (501) | H₁*(P+d₁₁*c₁₁+d₂₁*c₂₁) |
| Received Signal of Subcarrier 2 (502) | H₁*(P+d₁₂*c₁₁+d₂₂*c₂₁) |
| Received Signal of Subcarrier 3 (503) | H₁*(P+d₁₁*c₁₂+d₂₁*c₂₂) |
| Received Signal of Subcarrier 4 (504) | H₁*(P+d₁₂*c₁₂+d₂₂*c₂₂) |
| Received Signal of Subcarrier 5 (505) | H₁* -(d₁₁*c₁₁+d₂₁*c₂₁+d₁₂*c₁₁+d₂₂*c₂₁+d₁₁*c₁₂+d₂₁*c₂₂+d₁₂*c₁₂ +d₂₂*c₂₂) |
| Averaging [(501)+(502)+(503) +(504)+Pn*(505)]/4 P | 4 H₁*P/4P=H₁ |

According to the present invention, channel response values estimated by such a method are averaged once more to decrease noise, thereby estimating channel values over the entire frequency band.

Hereinafter, the result obtained by a performance simulation test of the channel estimation method according to the present invention will be described. The condition factors for the simulation test are expressed in Table 2.

**Table 2**

| Factor | Value |
|---|---|
| The Number of Subcarriers (Nc) | 1024 |
| Spreading Factor (SF) | 16 |
| Modulation Mode | QPSK |
| The Number of Users (K) | 4 |
| Channel Environment | Rayleigh Fading Environment |
| Combining Scheme | MMSEC |

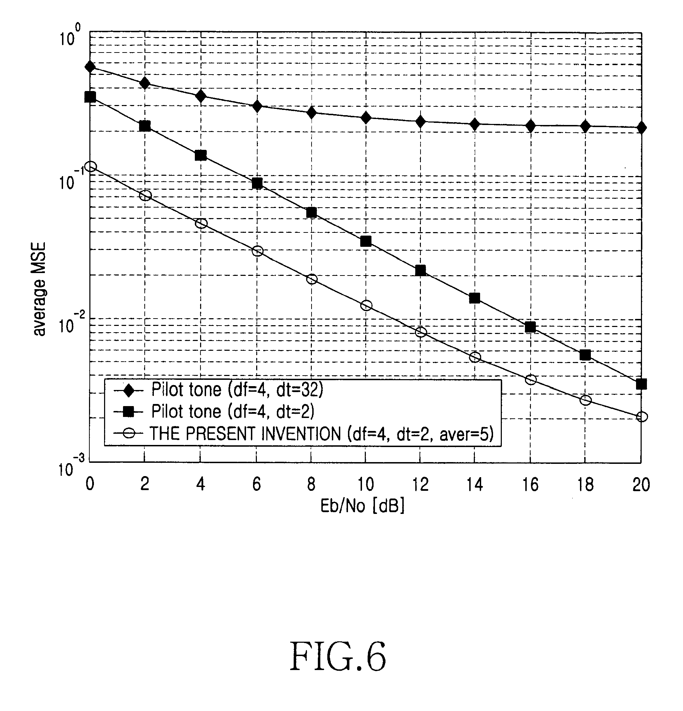

FIG. 6 is a graph showing the mean square errors of a conventional pilot-tone-based channel estimation method and a channel estimation method according to the present invention on the basis of Eb/No, with respect to four users under a Rayleigh fading channel environment including 25 paths with a moving speed of 120 km/h. In FIG. 6, the pilot tone refers to the pilot-tone-based channel estimation method in which a least square scheme is employed for signal detection. In the graph, 'df' and 'dt' exhibit the frequency of a pilot tone and an interval of the pilot tone in the time domain, respectively. Also, a linear interpolation is employed to obtain channel state information of the entire band. 'Pilot tone (df=4, dt=32)' represents a pilot pattern arranged unsuitable for a channel state, significantly degrading channel estimation performance. In contrast, 'Pilot tone (df=4, dt=2)' represents the performance when the interval between pilot symbols is most suitable for a channel state. As shown in FIG. 6, it can be understood that the channel estimation method of the present invention decreases performance degradation due to noise by carrying out the averaging procedure, thereby improving performance by approximately 5 dB within a minimum square error (MSE) range of 10⁻² as compared with the conventional pilot-tone-based channel estimation method.

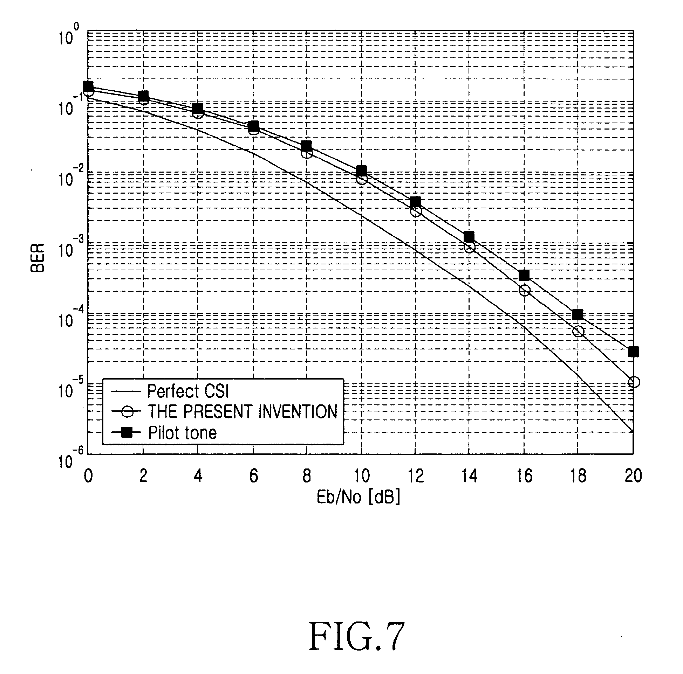

FIG 7 is a graph showing the performance test result for a bit error rate as a function of Eb/No according to the channel estimation method of the present invention. A minimum mean square error combination scheme is employed for signal detection. 'Perfect CSI' represents a bit error rate (BER) on the assumption that exact channel state information has been known. As shown in FIG 7, it can be understood that the channel estimation method of the present invention provides an improved BER performance as compared with the conventional channel estimation method, under the same data rate and transmission power.

As described above, according to the channel estimation method of the MC-CDMA system based on the present invention, it is possible to simultaneously obtain both the position optimization of a pilot symbol, according to a channel state such as a correlation band or correlation time (which is an advantage over the pilot-tone-based channel estimation method), and a noise reduction effect by the averaging procedure (which is an advantage over the pilot-channel-based channel estimation method), so that the accuracy of channel estimation can be improved.

While the present invention has been shown and described with reference to certain preferred embodiments thereof, it will be understood by those skilled in the art that various changes in form and details may be made therein without departing from the scope of the invention as defined by the appended claims. Accordingly, the scope of the invention is not to be limited by the above embodiments but by the claims and the equivalents thereof.

## Claims

1. A method for estimating a channel state information using a pilot signal in a wireless communication system based on multi-carrier multiple access, the method comprising the steps of:
generating a data dependent pilot symbol correlated with spreading data symbols which is included in a spread symbols generated through a band spreading in a transmission side;
inserting the data dependent pilot symbol into specified subcarriers and transmitting the data dependent pilot symbol;
receiving the spreading symbol by a reception side; and
detecting the pilot channel signal by using the spreading data symbols and data dependent pilot symbol.

2. The method as claimed in claim 1, wherein the data dependent pilot symbol is generated by dividing a reciprocal number of a sum of the spreading data symbols by a transmission power normalization factor.

3. The method as claimed in claim 1 or 2, wherein the pilot signal is detected by adding the spread data symbols and the correspondent data dependet pilot symbol which is multiplied by power normalization factor..

4. The method as claimed in one of claims 1 to 3, wherein the insertion position of the data dependent pilot symbol is patterned according to a channel state.

5. The method as claimed in one of claims 1 to 4, further comprising a step of performing a frequency interleaving process with respect to the spread data symbol.
